Europäisches Patentamt

European Patent Office

Office européen des brevets

(19)

(11) **EP 1 351 179 A1**

(12) **EUROPEAN PATENT APPLICATION**

(43) Date of publication:
08.10.2003 Bulletin 2003/41

(51) Int Cl.[7]: **G06F 17/60**

(21) Application number: 03076014.4

(22) Date of filing: 07.04.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 05.04.2002 US 117678

(71) Applicant: **Fernholz, Erhard R.**
08540 Princeton, New Jersey (US)

(72) Inventor: **Fernholz, Erhard R.**
08540 Princeton, New Jersey (US)

(74) Representative: **Prins, Adrianus Willem et al**
Vereenigde,
Nieuwe Parklaan 97
2587 BN Den Haag (NL)

(54) **A technique for managing a financial portfolio formed of multiple weight-based component portfolios**

(57)     A method and accompanying apparatus for managing, through use of combined (averaged) optimized weights, a composite financial portfolio formed of multiple component portfolios, which all follow a common investment strategy and all contain the same securities, that advantageously reduce both performance variability, i.e., maximal drift, amongst the component portfolios and associated trading costs. Specifically, an average optimized weight is periodically determined for each security held across all component portfolios in the composite portfolio, rather than a separate weight unique to the component portfolios in just one optimization tranche, and then using, for subsequent re-balancing, that averaged weight for that security in each and every such component portfolio for subsequent and periodic re-balancing. Optimization and re-balancing each occur at different periodicities and each on a different time-staggered basis.

FIG. 2

**Description**

BACKGROUND OF THE DISCLOSURE

1. Field of the Invention

The invention relates to a method and accompanying apparatus for managing, through use of combined (averaged) optimized weights, a composite financial portfolio formed of multiple component portfolios, which all follow a common investment strategy and all contain the same securities, that advantageously reduce both performance variability amongst the component portfolios and associated trading costs.

2. Description of the Prior Art

Investment portfolios collectively follow a very wide multitude of different strategies. Illustrative strategies include growth-oriented, income-oriented, industrial or sector-specific. Further, a wide variety of security-based investment vehicles exist, including bond and equity-based investments.

A common strategy involves use of portfolio weights in which each security in the portfolio is assigned a given weight, i.e., a proportion of the entire portfolio. In view of fluctuations in market value of all securities in the portfolio, the portfolio is periodically re-balanced such that certain amounts of various constituent securities in the portfolio are either bought or sold in order to re-balance the holding of each such security back to its proper weight. The weights themselves are determined, specifically optimized, either numerically through some type of machine-implemented algorithm and/or are determined through efforts of various equity analysts.

Unfortunately, as investment portfolios become substantial in terms of their dollar value, as is often the case in managing money for a large pension fund, re-optimizing the weights for such a single portfolio can result in immense re-optimization trades. Those trades, by virtue of their size such as US $ 100 Million or more or even $ 1 Billion of a given security, often carry very significant costs, such as 50 basis points or even as much as 1% of a total value of the security being traded -- due to difficulties inherent in trading a large block of a given security, and also often adversely affect the market price for that security at which that trade can be effected. While a cost of this amount may seem rather small in isolation, it can become quite significant relative to historic long-term market returns of approximately 8-9% and, as such, diminish the attractiveness of this type of investment vehicle.

In an effort to reduce the need for large re-optimization trades and their attendant costs, one type of conventional weight-based portfolio management scheme, as practiced by the present assignee, involves breaking a large investment portfolio into separate component portfolios, all following the same investment strategy and containing the same securities (though the specific amounts of each such security will clearly vary). Each stock in each component portfolio carries its own weight.

These weights can be determined, specifically optimized, through any one of various techniques, for example, as in United States Patent 6,003,018 (issued to R.O. Michaud on December 14, 1999). Apart from that technique, the component portfolios themselves are organized into separate optimization tranches. Each such tranche may contain one or more such component portfolios. The weights for every portfolio in each optimization tranche are themselves re-optimized, using the values of their corresponding existing weights as input, on a periodic often quarterly basis, i. e., once every 13 weeks, but with the re-optimization of each such tranche being staggered in time by, e.g., one week, from that of the next tranche. Staggering the re-optimizations in that fashion permits the component portfolios to sufficiently track movements of the broad market while advantageously reducing the need for large trades and the cost and market distortion those trades would otherwise cause. All portfolios in every optimization tranche are then re-balanced on a weekly basis. To reduce the trading cost for the weekly re-balancing trades, the large portfolio is broken into separate trading tranches. Each trading tranche contains one or more component portfolios and is itself re-balanced, i.e., stocks in each of the specific component portfolios in that trading tranche are bought or sold as needed, on a staggered weekly basis relative to other such trading tranches. In that regard, one trading tranche will be re-balanced with trades therefor being routed through one particular broker every Monday. A second trading tranche in the same optimization tranche will be re-balanced every Tuesday with trades for that particular tranche being routed through a second, though different, broker, and so forth.

The fifth and final trading tranche in the same optimization tranche will be re-balanced every Friday with its trades being routed through a fifth and different broker.

Unfortunately, this conventional approach, while yielding desirous financial returns, still presents various drawbacks. First, the performance of individual component portfolios tends to drift apart with maximum drift amounting to as much as a few percent (e.g., 2-4%), though the average inter-component portfolio drift is much lower. Nevertheless, such a large amount of drift adversely affects overall investor confidence. Further, from time to time, even this scheme can still generate relatively large re-optimization trades that carry significant trading costs.

Thus, a need exists in the art for a technique, particularly though certainly not exclusively suited for use with multiple weight-based portfolios, all following a common investment strategy, for managing the portfolios in such a manner as to significantly decrease maximal inter-portfolio drift and trading costs.

## SUMMARY OF THE INVENTION

Through my present invention, I have advantageously overcome these deficiencies in the art by determining an average optimized weight, for each security held across all the component portfolios in a composite portfolio, rather than a separate weight unique to the portfolios in just one optimization tranche, and then using, for subsequent re-balancing, that averaged weight for that security in each and every component portfolio. In determining each averaged weight, the contribution of the optimized weights for that security from each and every component portfolio, can itself be weighted as desired, either equally or otherwise to favor one or more such portfolios as against the others, with all the latter weights totaling to one.

Inasmuch as new optimized weights are being generated, e.g., each week for a different one of illustratively thirteen different optimization tranches (OTs), the averaged optimization weights, used across each and every component portfolio, would effectively track market fluctuations occurring during the immediately preceding week though on a reduced proportional, e.g., 1/13th, basis. In effect, these fluctuations would be averaged out across all the component portfolios (in all the OTs) rather than markedly varying the optimization weights for the portfolios in just one OT to the exclusion of the others -- as the latter would occur using the conventional methodology. As such, through use of my inventive methodology, all of the component portfolios should consistently track longer-term market movement but with markedly reduced maximal drift.

My invention advantageously possesses the feature that it is not limited to using a particular optimization technique but can function with nearly any such technique to yield lowered inter-portfolio variability, decreased trading cost and thus enhanced long-term financial performance.

## BRIEF DESCRIPTION OF THE DRAWINGS

The teachings of the present invention can be readily understood by considering the following detailed description in conjunction with the accompanying drawings, in which:

FIG. 1 depicts a conventional methodology for managing composite portfolio 1 through use of multiple weight-based component portfolios 5;

FIG. 2 depicts my inventive methodology for managing composite portfolio 1' through use of multiple weight-based component portfolios 5';

FIG. 3 depicts Portfolio Management Process 300, including its basic constituent processes and their inter-relationships, for managing a composite portfolio using my inventive methodology;

FIG. 4 depicts a high-level block diagram of a computer-based system 405, illustratively a personal computer, that can implement my inventive methodology shown in FIGs. 2 and 3;

FIG. 5 depicts a high-level flowchart of Portfolio Weight Updating Process 500 shown in FIG. 3, which is executed by system 405 shown in FIG. 4;

FIG. 6 depicts a high-level flowchart of Combined Weight Generating (Averaging) Process 600 shown in FIG. 3, which is also executed by system 405 shown in FIG. 4; and

FIG. 7 depicts a high-level flowchart of Portfolio Re-balancing and Trading Process 700 shown in FIG. 3, which is also executed by system 405 shown in FIG. 4.

To facilitate understanding, identical reference numerals have been used, where possible, to designate identical elements that are common to the figures, with primed numbers indicating similar such elements.

## DETAILED DESCRIPTION

After considering the following description, those skilled in the art will clearly realize that the teachings of my inventive technique can be readily utilized in managing any type of composite equity portfolio -- regardless of its particular investment strategy, through periodic re-optimization and re-balancing of a series of individual component portfolios all following a common investment strategy, to achieve decreased drift amongst the component portfolios and decreased trading cost. As such, my invention is particularly advantageous in managing very large portfolios, in terms of their value, that of necessity must be parsed into separate component portfolios. Further, my inventive technique is applicable for use with nearly any type of portfolio optimization methodology, whether it be automated through periodic machine-based processing of, inter alia, market data, and/or through human portfolio analysts who determine weight factors for each individual security holding using their own analytical tools and analysis. However, for simplicity, I will discuss my invention in the illustrative context of using machine-generated weights.

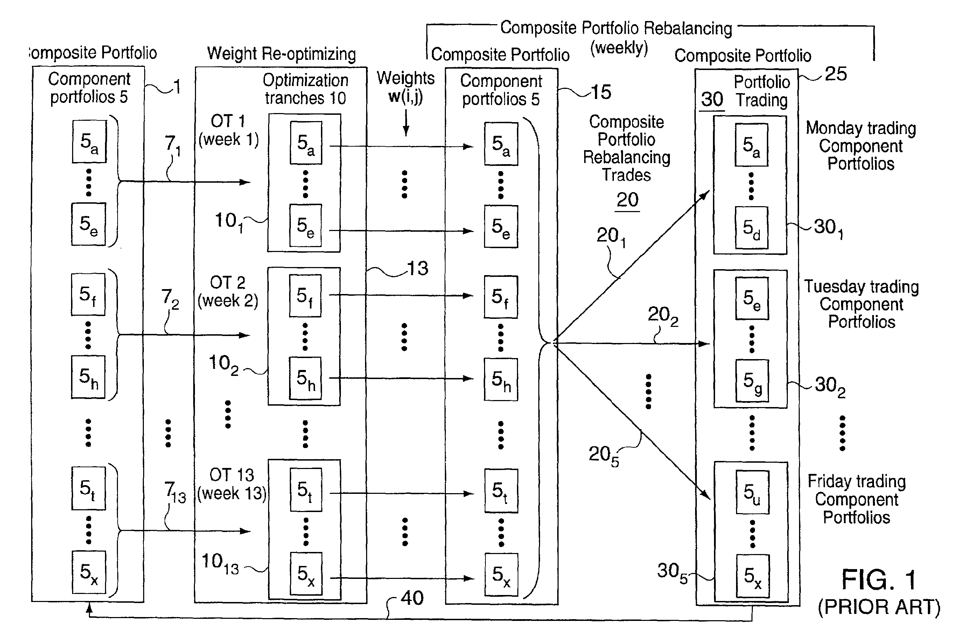

FIG. 1 depicts a conventional weight-based portfolio management scheme. As shown, this scheme involves breaking large investment portfolio 1 into separate component portfolios 5, all following the same investment strategy, and specifically formed of component portfolios $5_a$, ..., $5_e$, $5_f$, ..., $5_h$ and $5_t$, ..., $5_x$. All the component portfolios hold the same securities; though, as will be clearly evident from the ensuing discussion, the amount, e.g., number of shares, of each security will clearly vary amongst these portfolios. The number of component portfolios is not critical, and each separate component portfolio itself may be formed of one or more individual though identical sub-portfolios. For the sake of simplicity, I will assume hereinafter that each component portfolio is only a unitary portfolio; though anyone of skill in the art will readily appreciate how multiple individual sub-portfolios would be handled.

In essence, each security (holding) in each component portfolio 5 carries its own weight which is periodically optimized based on a variety of factors. Between successive optimizations, each component portfolio is re-balanced through which, given preceding changes in market prices, trades are executed, either purchases or sales as needed, to bring the holdings of each security in line with its optimized weighting. To reduce trading costs, portfolio trades are spread across an entire week, with a portion of the re-balancing trades being executed each business day of the week during which an underlying exchange (market) is open.

Optimized weights can be determined through any one of various techniques with the specific technique not being critical at all to the present invention nor forming a part thereof. Hence, for simplicity, I will omit any detailed explanation of any such technique.

To reduce the need for large re-optimization trades and their attendant costs, component portfolios 5 are organized, as indicated by braces and brackets $7_1$, $7_2$, ..., $7_{13}$, into separate optimization tranches (OT) 10, and specifically and illustratively thirteen such tranches $10_1$, $10_2$, ..., $10_{13}$. While the portfolios in each such tranche are optimized every thirteen weeks (every three months), successive tranches are optimized one week apart, i.e., on a time-staggered basis. As such, during any one week in a thirteen-week period, one of the tranches is being re-optimized with the re-optimization periodicity for that tranche being thirteen weeks. Illustratively, as shown, tranche $10_1$ is optimized during week 1, tranche $10_2$ during week 2 and so forth, with tranche $10_{13}$ being optimized during week 13. As a result of weight optimization, generally represented by block 13, a matrix of optimized weights $\mathbf{w}(i,j)$, where i = 1,..., m and j = 1,...,n with m and n being a total number of securities in each component portfolio and a total number of different component portfolios, respectively. Since all the component portfolios contain the same securities, the optimized weights for each such security across all the component portfolios in the same optimization tranche are the same.

Once each optimization tranche has been optimized, then the portfolios in that tranche are re-balanced every week during the ensuing thirteen week period. This re-balancing, being well known in the art and also fully described in, e.g., United States Patent 5,819,238 (issued to E.R. Fernholz on October 6, 1998), which is incorporated by reference herein, is generally represented by block 15. Re-balancing trades 20, for all the component portfolios 5, result. Trading charges, for the same size trade, often vary somewhat amongst different brokers. Accordingly, to gain a degree of cost saving by incurring an "average" trading charge, for trading purposes composite portfolio 1 is organized, as shown, into five separate trading tranches 30, each of which trades on a different day of the week and through a different broker. Trading tranches 30 contain tranches $30_1$, $30_2$, ..., $30_5$ with tranche $30_1$, illustratively consisting of component portfolios $5_a$, ..., $5_d$, trading on Monday through one broker; tranche $30_2$, illustratively consisting of component portfolios $5_e$, ..., $5_g$, trading on Tuesday through a second broker; and so forth with tranche $30_5$, illustratively consisting of component portfolios $5_u$, ..., $5_x$, trading on Friday through a fifth broker. To reduce affects of short-term market transients that may occur on a given day or two, only those component portfolios in a trading tranche that are to be traded on a given day could be re-balanced on that day immediately prior to their trades being determined and executed, rather than all the component portfolios in all the trading tranches having their re-balancing trades determined at essentially the same time during the week.

Further, as a result of each of the component portfolios being re-balanced weekly, a large number of trades can be generated, occasionally with, for all or a portion of a trade, one component portfolio being on one side of the trade and another portfolio being on the other side. As represented by path 40, composite portfolio 25 effectively becomes composite portfolio 1 for subsequent re-optimization, and re-balancing and so forth, in the manner described above, for whatever duration the composite portfolio is to be managed.

Unfortunately, as one can appreciate, given the time-staggered nature between optimizations for successive optimization tranches, the weights, for the same security, will tend to drift somewhat, owing to market conditions, from the component portfolios in one optimization tranche to those in another. This can yield a relatively large range of drift, among the component portfolios, to as much as 2-4%, though with average amount of drift being much smaller. Further, from time to time, even this scheme can still generate relatively large re-optimization trades that carry significant trading costs.

Through my present invention, I have advantageously overcome these deficiencies in the art by determining an average optimized weight, for each security held across all the component portfolios in the composite portfolio, rather than a separate weight unique to the portfolios in just one optimization tranche, and then using, for subsequent re-balancing, that averaged weight for that security in each and every component portfolio. In determining each averaged weight, the contribution of the optimized weights for that security from each and every component portfolio, can itself be weighted as desired, either equally or otherwise to favor one or more such portfolios as against the others, with all the latter weights totaling to one.

Inasmuch as new optimized weights are being generated each week for a different one of the thirteen OTs, the averaged optimization weights, used across each and every component portfolio, would effectively track market fluctuations occurring during the immediately preceding week though on a reduced, namely 1/13th basis. While other optimization intervals than every thirteen weeks could be used, hence resulting in a greater or lesser number of OTs over which staggered weekly optimizations would occur, I have found that using thirteen such OTs and averaging amongst the resulting optimized weights retains sufficient sensitivity to short-term market trends but appropriately filters out transients in market movement.

In effect, market fluctuations would be averaged out across all the component portfolios (in all the OTs) rather than markedly varying the optimization weights for the portfolios in just one OT to the exclusion of the others -- as the latter would occur using the conventional methodology. As such, through use of my inventive methodology, all of the component portfolios should consistently track longer-term market movement but with markedly reduced maximal drift.

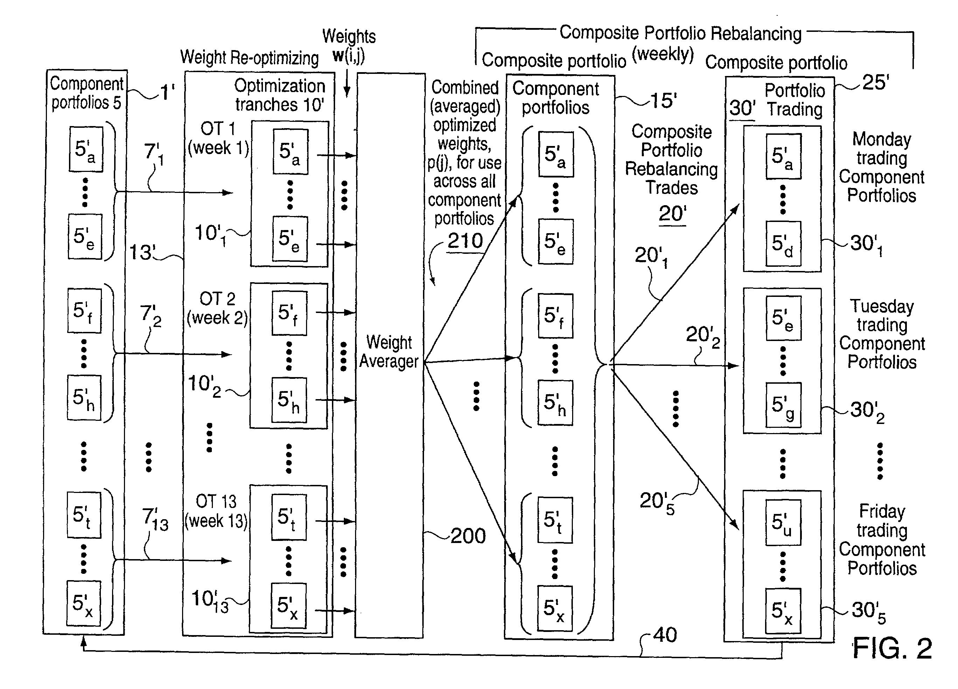

FIG. 2 depicts my inventive methodology for managing composite portfolio 1' through use of multiple weight-based component portfolios 5'. Those elements of FIG. 2 that carry a primed designation are highly similar (though not necessarily identical) to those carrying the same reference number in FIG. 1. However, the portfolio weights in the optimization tranches 10' are identical to those in optimization tranches 10. The differences, with respect to the component and composite portfolios shown in these two figures and owing to the use of averaged optimized weightings in the methodology shown in FIG. 2, lie in the specific amount of the same security held in the corresponding portfolios in these figures. Given these similarities, I will only address the fundamental differences between these two methodologies.

As indicated in FIG. 2, the individual optimized weights ($\mathbf{w}$(i,j)) for all component portfolios 5' in all the optimization tranches are applied as input to weight averager 200. Inasmuch as all the component portfolios hold the same securities, then for each such security, averager 200 calculates its corresponding weight as a weighted (combined) average of each of the weights for that security across all the component portfolios and generates an averaged optimized weight (p(j)) that is used for that security across all the component portfolios, as calculated illustratively through iterative execution of equation (1) as follows (where p(j) is initialized to zero):

$$p(j) \leftarrow p(i) + q(i) \cdot w(i, j) \tag{1}$$

where: q(i) is a constant weight factor subject to the following constraints given by equations (2) as follows:

$$all \ \ q(i) > 0; \ \sum_{i=1}^{m} q(i) = 1 \tag{2}$$

and where: weight matrix $\mathbf{w}$(i,j) is subject to the following constraints as given by equations (3) as follows:

$$all \ \ w \ (i, j) \geq 0; \ \sum_{j=1}^{n} w(i, j) = 1 \ \ for \ \ each \ \ i = 1, \ ..., \ m \tag{3}$$

and:

n is the number of securities in each of the component portfolios; and
m is the number of component portfolios in composite portfolio 1'.

Illustratively, all the (q(i)) values are set equal, though they need not be if preference is to be given to holdings in one or more component portfolios over the others.

The resulting weights p(j) are then used, as symbolized by lines 210, as combined (averaged) optimized weights for all the portfolios. The same security (j) held in each of the component portfolios is then re-balanced on a weekly basis, given fluctuations in market price, to its corresponding averaged optimized weight (p(j)), as indicated in blocks 15' and with staggered daily trading as indicated by block 25' for different trading tranches.

With the exception of using a common, identical averaged optimized weight across all the portfolios for the same security, rather than individual optimized weights for each such component portfolio, the latter being the case for the conventional methodology shown in FIG. 1, all the other constituent elements of the methodology depicted in FIG. 2 are identical to those elements shown in FIG. 1.

Advantageously, as compared to results achieved through the conventional methodology shown in FIG. 1, I have empirically found that, through use of my inventive methodology, the ensuing number of large optimization trades that would otherwise occur is essentially eliminated with a concomitant, appreciable savings in trading costs. Further, as expected, the maximum and average drift between component portfolios is also substantially reduced, hence reducing variability and providing enhanced consistency in performance across all the component portfolios. These effects beneficially increase the resulting overall financial return provided through my inventive methodology. In that regard, maximum drift is reduced to approximately one quarter of its value that typically results from use of the conventional approach. Additionally, re-balancing trades where component portfolios are on opposite sides of each such trade -- which does occur from time to time through the conventional approach -- are also eliminated, thereby again reducing both turnover and trading costs and further increasing the overall return.

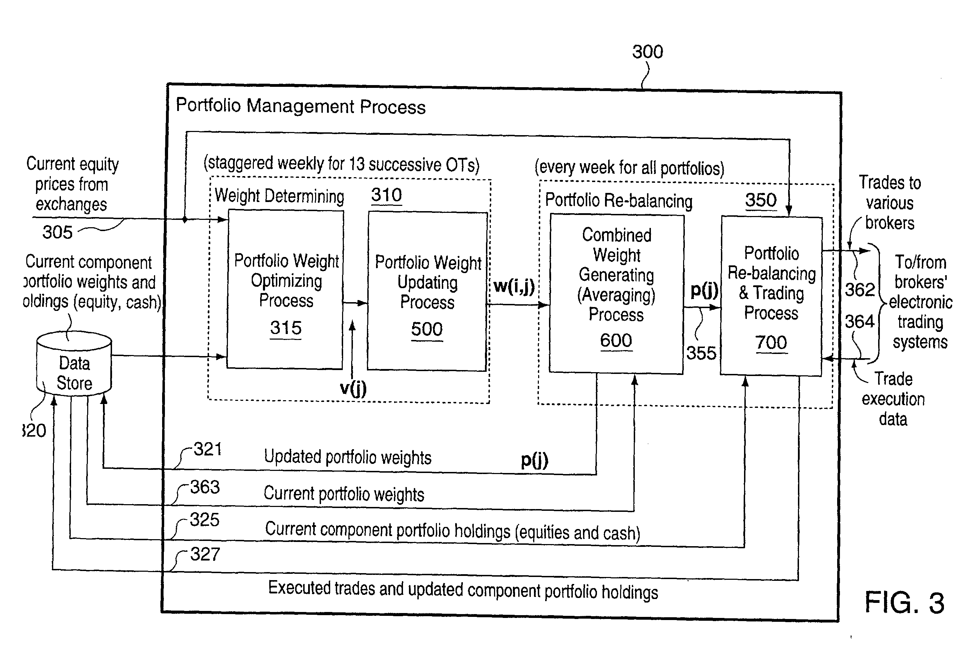

FIG. 3 depicts an overall process, specifically Portfolio Management Process 300, including its basic constituent processes and their inter-relationships, for managing a composite portfolio using my inventive methodology.

As shown, process 300 is formed of two basic portions: Weight Determining Process 310, which contains Portfolio Weight Optimizing Process 315 and Portfolio Weight Updating Process 500, and Portfolio Re-balancing Process 350 which itself contains Combined Weight Generating (Averaging) Process 600 and Portfolio Re-balancing and Trading Process 700. Process 310 is repeated on a staggered weekly basis for each of thirteen different optimization tranches, as described above, with process 350 being repeated weekly for each and every component portfolio. Weight Determining Process 310 calculates optimized weights for each optimization tranche (OT); while Portfolio Re-balancing Process 350 generates averaged (combined) optimized weights for use across all the component portfolios and then re-balances these portfolios, including generating appropriate re-balancing trades, as necessary.

In actuality and owing to the different periodicities and staggered timings at which processes 310 and 350 will be performed for the individual component portfolios, these two processes will generally operate on different component portfolios at a time and execute in a pipelined fashion essentially independently of each other, with weight data being passed between these processes through weight matrix $\mathbf{w}(i,j)$. However, these processes will execute in serial fashion for any one component portfolio. To simplify the figure and enhance reader understanding, FIG. 3 depicts a serial linkage of these processes for handling any one component portfolio and will be discussed in that context.

In particular, for any one component portfolio (e.g., the $j^{th}$ portfolio), upon entry into process 300, Portfolio Weight Optimizing Process, using current security (e.g., equity) prices obtained, as symbolized by line 305, via an external data source emanating from brokers or other information providers, and originating at appropriate exchange floors (or computerized trading mechanisms, as in the case of NASDAQ stock exchange), and current component weights and holdings stored within data store 320, calculates optimized security weights for that portfolio and every other component portfolio in the same OT. Optimization proceeds using whatever optimization methodology is indicated or appropriate for an instrument strategy underlying that portfolio. The resulting optimized weights (v(j)) for all holdings in the $i^{th}$ component portfolio are supplied to Portfolio Weight Updating Process 500 which stores these weights as the security weights in weight matrix $\mathbf{w}(i,j)$ and specifically in the row established for this particular component portfolio. Similarly, the weights for the holdings in every other component portfolio in the same OT are also stored in corresponding rows of the weight matrix. As discussed above, process 310 is repeated every thirteen weeks to yield new optimized weights (v(j)) for every component portfolio contained within the OT, with optimizations for successive OTs being calculated on a staggered weekly basis.

Once the optimized weights have been inserted into weight matrix $\mathbf{w}(i,j)$ for the $\mathbf{i}^{th}$ portfolio (as well as all others in its OT), thereafter, process 350 is performed to generate combined (averaged) optimized weights and to periodically re-balance that portfolio. Process 350 is executed every week for each and every component portfolio. In particular, upon entry into process 350, Combined Weight Generating (Averaging) Process 600, using the weight data then residing within matrix **w**(i,j), with this data containing newly optimized weights for one successive OT each week, calculates combined (averaged) optimized weights for use across all the component portfolios. In doing so, process 600 utilizes data within weight matrix **w**(i,j), and current portfolio weights residing within data store 320; the accessing of the latter weights being represented by line 363. The resulting combined (averaged) optimized weights, p(j), are stored back, as represented by line 321, into data store 320 for use during the new execution of process 600 for a next successive OT, and so forth. Once combined (averaged) optimized weights p(j) are determined for each component portfolio in the current OT, these weights are routed, as represented by lien 355, to Portfolio Re-balancing and Trading Process 700. For each component portfolio, this process calculates actual portfolio weighting, based on a current value of that portfolio determined in response to current security prices, the application of which to process 700 is symbolized by line 305, and current component portfolio holdings (e.g., equity and cash) accessed, as symbolized by line 325, from data store 320. For each holding in the component portfolio, its actual weight is then compared by process 700 to its combined (averaged) optimized weight, with appropriate re-balancing trades then being calculated and initiated by process 700 to bring the actual weight within a pre-defined range of the combined (averaged) optimized weight. To undertake trading, process 700 generates appropriate trading instructions and routes, as symbolized by line 362, these instructions to an appropriate broker, based on the trading tranche then being traded. Once these trades have been executed, trade execution data (so-called trade "confirmations") is supplied, as symbolized by line 364, by that broker back to process 700. In response to this confirmation data for any component portfolio then being traded, process 700 suitably updates, as symbolized by line 27, the holdings for that portfolio stored within data store 320.

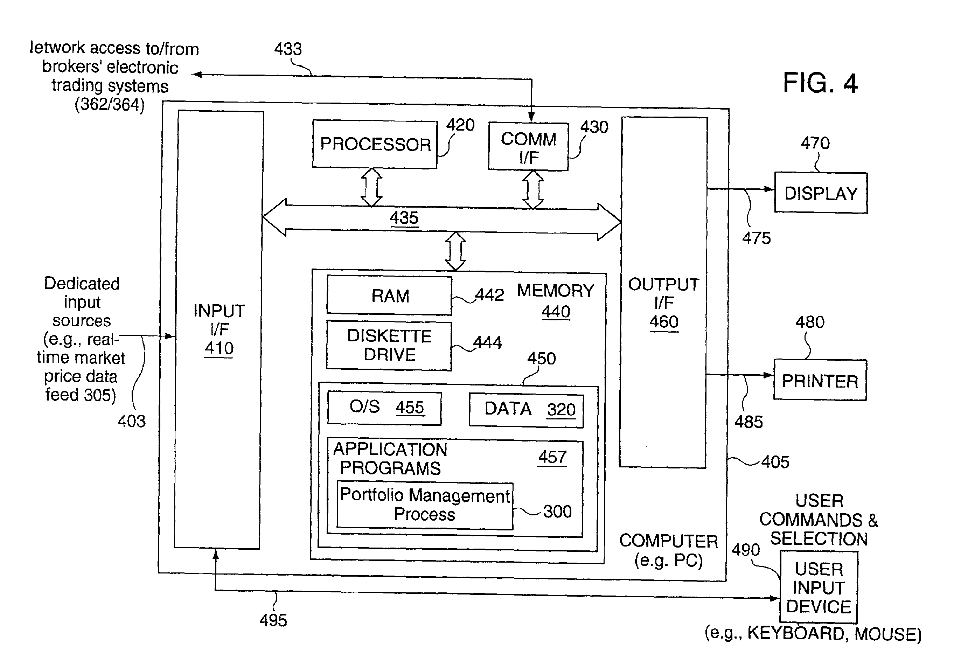

FIG. 4 depicts a high-level block diagram of a computer-based system 405 that can implement my inventive methodology shown in FIGs. 2 and 3. Inasmuch as system 405 can readily be implemented as a personal computer (PC), I will discuss this system in that context.

As shown in FIG. 4, PC 405 comprises input interfaces (I/F) 410, processor 420, communications interface 430, memory 440 and output interfaces 460, all conventionally interconnected by bus 435. Memory 440 generally includes different modalities, including illustratively random access memory (RAM) 442 for temporary data and instruction store, diskette drive(s) 444 for exchanging information, as per user command, with floppy diskettes, and non-volatile mass store 450 that is implemented through a hard disk, typically magnetic in nature. Mass store 450 may also contain a CD-ROM or other optical media reader (not specifically shown) (or writer) to read information from (and write information onto) suitable optical storage media. The mass store stores operating system (O/S) 455, data store 320 and application programs 457; the latter illustratively containing Portfolio Management Process 300 (which incorporates my inventive technique) (see FIG. 3). O/S 455, shown in FIG. 4, may be implemented by any conventional PC operating system. Given that, I will not discuss any components of O/S 455 as they are all irrelevant. Suffice it to say, application programs 457 execute under control of the O/S.

Incoming information can arise from two illustrative external sources: via network connection 433 for bi-directional communication with brokers' electronic trading systems (as represented by lines 362 and 364 shown in FIG. 3) to communications interface 430, or from a dedicated input source (such as a real-time market price data feed -- as represented by line 305 in FIG. 3), via path(es) 403, to input interfaces 410. Dedicated input can also originate from other networked and/or dedicated sources, as need be. Input interfaces 410 contain appropriate circuitry to provide necessary and corresponding electrical connections required to physically connect and interface each differing dedicated source of input information to PC 405. Under control of the operating system, application programs 457 may exchange commands and data with the external sources, via network connection 433 or path(es) 403, to transmit and receive information during program execution.

Input interfaces 410 also electrically connect and interface user input device 490, such as a keyboard and mouse, to PC 405. Display 470, such as a conventional color monitor, and printer 480, such as a conventional laser printer, are connected, via leads 475 and 485, respectively, to output interfaces 460. The output interfaces provide requisite circuitry to electrically connect and interface the display and printer to the computer system.

Furthermore, since the specific hardware components of PC 405 as well as all aspects of the software stored within memory 440, apart from the various software processes, as discussed below, that implement the present invention, are conventional and well-known, they will not be discussed in any further detail.

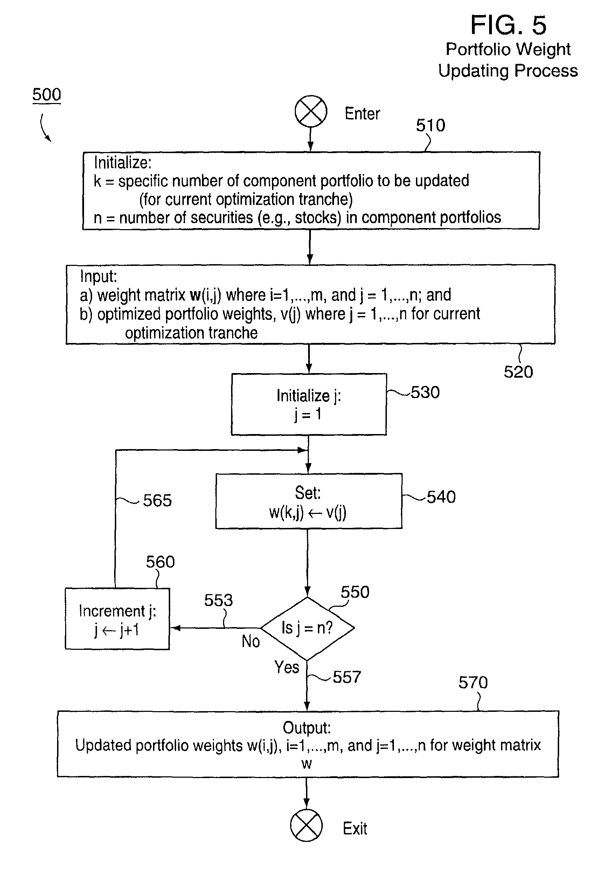

FIGs. 5-7 collectively depict high-level flowcharts of salient software processes, which execute on system 405, for implementing the present invention, with specifically FIG. 5 depicting a high-level flowchart of Portfolio Weight Updating Process 500. Process 500 assigns the optimized weights (v(j)) determined for a component portfolio in a given optimization tranche into an appropriate row in the weight matrix. This routine is separately executed for each and every component portfolio in that optimization tranche.

Upon entry into routine 500, block 510 is first executed. This block assigns pre-defined values to variable k and n, with k being a specific number of a component portfolio to be updated, and n is a total number of securities in all the component portfolios (inasmuch as all the component portfolios contain the same securities, n is the same across all these portfolios). Thereafter, block 520 is executed to input: (a) weights w(i,j) with i = 1,...,m andj = 1,...,n from the weight matrix, and (b) newly determined optimized portfolio weights v(j) with j = 1,...,n for the current optimization tranche containing component portfolio k. Once this occurs, a value of index j is set equal to one through execution of block 530. Thereafter, execution enters block 540 which sets a specific weight w(k,j) in the weight matrix **w** equal to v(j). The optimized portfolio weights, v(j), are constrained as given by equations 4 below:

$$all \ v(j) \ ^3 \ 0; \ \overset{n}{\underset{j=1}{\overset{\circ}{a}}} v(j) = 1 \qquad\qquad (4)$$

Once block 540 fully executes, execution then proceeds to decision block 550 to determine whether all n optimized weights v(j) have been processed by testing the current value of index j against the value of n. If the current value of index j is less than the value n, then decision block 550 routes execution, via NO path 553, to block 560. This latter block, when executed, increments the current value of index j by one and directs execution, via path 565, back to block 540, and so forth. Alternatively, if the value of index j equals the value n, then decision block 550 routes execution, via Yes path 557, to block 570. This latter block, when executed, provides as output, the row of updated portfolio weights w(k,j) for the k$^{th}$ component portfolio in weight matrix **w**.

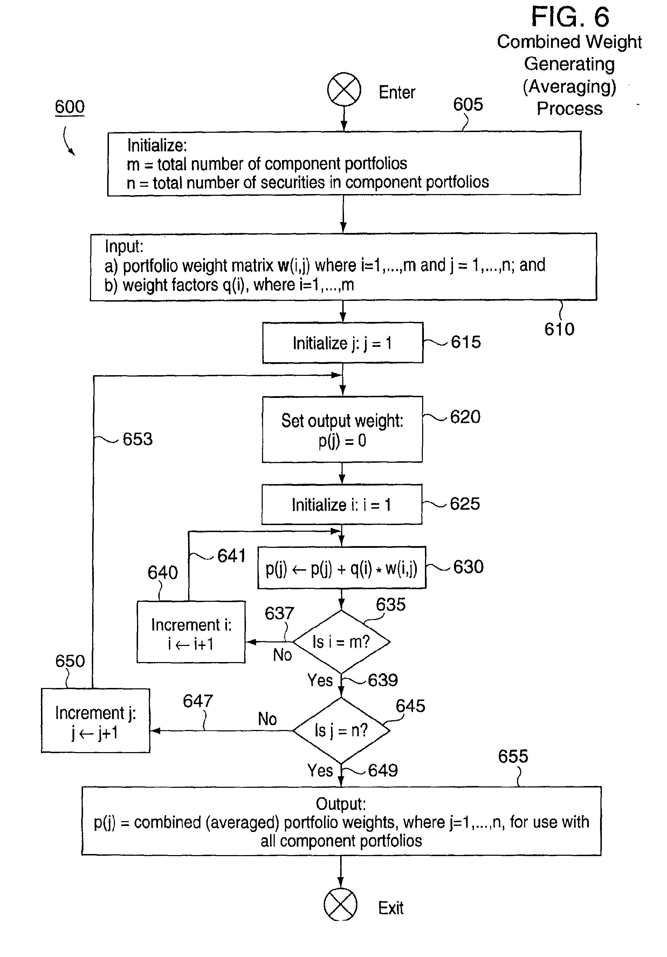

FIG. 6 depicts a high-level flowchart of Combined Weight Generating (Averaging) Process 600 shown in FIG. 3, which is also executed by system 405 shown in FIG. 4. Process 600 determined the averaged (combined) optimized weights for use across all the component portfolios.

Specifically, upon entry into process 600, execution proceeds to block 605 to initialize variables m and n equal to the total number of component portfolios and the total number of securities in each such portfolio, respectively. Thereafter, block 610 executes to input: (a) portfolio weight matrix **w**(i,j) where i = 1, ..., m and j = 1, ..., n. Thereafter, a value of index j is set equal to one through execution of block 615. Once this occurs, block 620 executes to set combined (averaged) optimized weight p(j) equal to zero. Next, execution proceeds to block 625 to initialize a value of index i to one. Through iterative execution of block 630 m times as a consequence of an execution loop formed of blocks 630, 635 and 640, block 630 combines and averages the optimized weights w(i,j) across all the component portfolios for the j$^{th}$ security, through implementing equation (1) above, to yield an averaged optimized weight p(j) for that security. Within this loop, decision block 635 tests a current value of index i to determine if the optimized weights for this security across all m portfolios have been processed. If the current value of index i is less than m, hence indicating that the optimized weights for this security in one or more component portfolios have not yet been processed, then decision block 635 directs execution, via its NO path 637, to block 640. This latter block increments the current value of index i by one and loops execution back, via path 641, to block 630, and so forth. Alternatively, if the current value of index i equals m, thus indicating that the optimized weights for the current security from all such component portfolios have been processed, then decision block 635 directs execution, via YES path 639, to decision block 645.

Decision block 645 tests whether combined (averaged) optimized weights have been determined for all n securities in the component portfolios. If the current value of j is less than n, indicating that additional averaged weights still need to be determined, then decision block 645 loops execution back, via NO path 647, to block 650. This latter block increments the current value of index j by one and loops execution back, via path 653, to block 620, to determine a combined (averaged) optimized weight for the next security, and so forth. Alternatively, if the current value of index j equals n, thus indicating that all the combined (averaged) optimized weights have been determined, then decision block 645 directs execution, via YES path 649, to block 655. This latter block, when executed, outputs combined (averaged) weight vector p(j) as the averaged optimized weights for subsequent use, during re-balancing, with all the component portfolios.

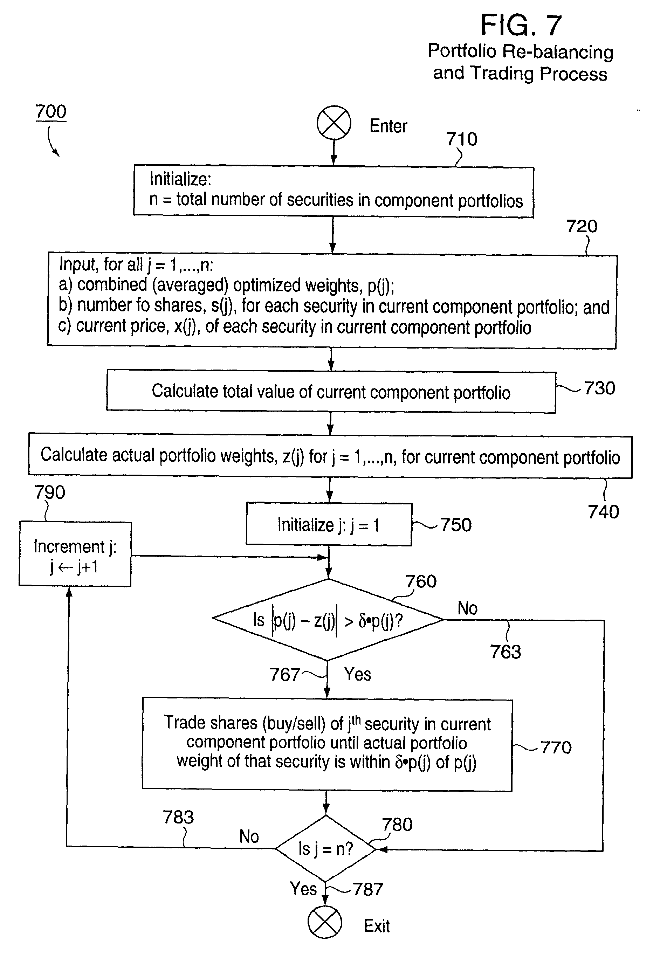

FIG. 7 depicts a high-level flowchart of Portfolio Re-balancing and Trading Process 700 shown in FIG. 3, which is also executed by system 405 shown in FIG. 4. This process re-balances a component portfolio and initiates trades of appropriate securities in that portfolio to effectuate the re-balancing. This process is separately executed for each component portfolio in a trading tranche then being re-balanced.

Upon entry in process 700, execution first proceeds to block 710 which, when executed, initializes variable n equal to the total number of securities in each component portfolio (this number is the same across all component portfolios). Thereafter, block 720 executes to input: (a) combined (averaged) optimized weights p(j); (b) number of shares s(j) for each security then held in a current component portfolio for which process 700 is then being executed; and (c) current (substantially real-time) market price, x(j), of each such security. Once this information is obtained, block 730 is then executed to calculate an actual total value of this component portfolio. The calculation is simply a sum of a current corresponding price multiplied by the number of shares then being held for each security (j) in that component portfolio. Once the portfolio value has been determined, execution proceeds to block 740 to determine actual portfolio weights, z(j), associated with each such security in the portfolio, i.e., a proportion of the total value of that portfolio attributable to that particular security. Once these weights have been determined, block 750 is executed to set a value of index j equal to one. After this occurs, block 760 executes to determine whether, for security j, an absolute value |p(j) - z(j)| of a difference between its actual weight and its combined (averaged) optimized weight lies outside (either positively or negatively) a pre-defined range of p(j), ($\delta \cdot$p(j)) where $\delta$ is generally a fixed decimal constant, typically on the order of .1; hence, indicating that this security needs to be re-balanced. If the difference exceeds this range, then decision block 760 directs execution, via YES path 767, to block 770. This latter block determines an amount of shares of security (j) that will need either to be bought or sold, as appropriate, to bring the difference within its pre-defined range and then issues appropriate trading instructions to initiate a trade that does so; hence, re-balancing that particular security. Once these instructions are generated, execution proceeds to decision block 780. This decision block tests whether all securities in the current component portfolio have been re-balanced. If the current value of index j is less than n, indicating that additional securities remain to be re-balanced, then decision block 780 loops execution back, via NO path 783, to block 790. This latter block increments the current value of index j by one and loops execution back to decision block 760, to determine whether a next successive security needs to be re-balanced and so forth. Execution also reaches block 790 directly, via NO path 763, in the event the weight difference determined by decision block 760 is sufficiently small thereby indicating that security j does not need to be re-balanced. In the event the current value of index j equals n indicating that all securities have been tested for possible re-balancing and re-balanced, if necessary, then execution simply exits from process 700, via YES path 787 emanating from decision block 780.

As noted above, the present inventive methodology will provide its advantageous results, as discussed above, with and regardless of the particular optimization process used -- provided the same optimization process is used across all the component portfolios. Furthermore, while I have described the optimization periodicity as being thirteen weeks for a given portfolio with staggered optimizations for successive optimization tranches occurring at weekly intervals within this thirteen week period, and weekly re-balancing for all component portfolios, these periods and the amount of time-staggering are not critical and can be modified as desired. However, these particular values have empirically proven to provide a proper tradeoff in permitting the component portfolios to sufficiently track fundamental market fluctuations but without exhibiting excess short-term volatility. Moreover, while I have described the component portfolios as being organized into five different trading tranches, with each such tranche undergoing re-balancing and trading on a different day of the week, the component portfolios can be organized for re-balancing and trading in a different manner and along a different schedule, respectively, as desired and consistent with reducing trading costs.

Although one embodiment which incorporates the teachings of the present invention has been shown and described in considerable detail herein, those skilled in the art can readily devise many other varied embodiments that still incorporate these teachings.

## Claims

1. A method for managing a composite investment portfolio formed of a plurality of component portfolios, wherein all of the component portfolios hold the same securities and each of the component portfolios has a numeric weight associated with each of said securities held in said each component portfolio, the method comprising the steps of:

   (a) optimizing each of the component portfolios residing in each of a plurality of optimization tranches, in response to current values of weights associated with said each component portfolio and prices of the securities obtained from an electronic data feed, to yield a corresponding plurality of optimized weights; the component portfolios being organized into a plurality of separate optimization tranches with each tranche containing at least a different one of the component portfolios, wherein a separate set of optimized weights is generated for and associated with each of the component portfolios, and each of said optimization tranches is repeatedly optimized at a first periodicity, and successive optimization tranches are optimized on a time-staggered basis spaced apart by a first interval;
   (b) determining, for each of said plurality of securities and in response to each said optimization tranches being optimized, a combined optimized weight, as a function of all of the optimized weights for said each security taken across all of said component portfolios, to yield a plurality of combined optimized weights for all of the securities;
   (c) setting the current weights for each of the plurality of component portfolios equal to the combined optimized weights;
   (d) re-balancing, at a second periodicity, an amount of holdings of each of the securities in each of the component portfolios substantially to the current weights so as to yield re-balancing trades; and
   (e) issuing, in response to the re-balancing trades, electronic trading instructions to trading systems to effectuate said re-balancing trades for each of the component portfolios.

**2.** The method recited in claim 1 wherein said determining step comprises the step of ascertaining the combined optimized weight for said each security as a weighted average of said optimized weights for said each security taken across all of said component portfolios.

**3.** The method recited in claim 2 wherein said determining step further comprises the step of equally weighting each of said optimized weights in determining the combined optimized weight.

**4.** The method recited in claim 3 further comprising the step of organizing the composite portfolio into trading tranches, wherein each one of said trading tranches comprises at least a different one of the component portfolios.

**5.** The method recited in claim 4 wherein the issuing step further comprises the step of issuing trading instructions for each one of said trading tranches on a time-staggered basis spaced apart by a second interval.

**6.** The method recited in claim 5 wherein the issuing step further comprises the step of routing the trading instructions for different ones of the trading tranches to different corresponding ones of a plurality of brokers for execution.

**7.** The method recited in claim 6 wherein the re-balancing step comprises the step, for a given one of the component portfolios, of determining appropriate trades sufficient to change an actual weighting of a corresponding one of the securities in the given one component portfolio to lie within a predefined range of a corresponding one of the current weights associated with the given one component portfolio.

**8.** The method recited in claim 7 wherein the first and second periodicities are thirteen weeks and one week, respectively; and the first and second intervals are a week and a week day, respectively.

**9.** Computer-implemented apparatus for managing a composite investment portfolio formed of a plurality of component portfolios, wherein all of the component portfolios hold the same securities and each of the component portfolios has a numeric weight associated with each of said securities held in said each component portfolio, the apparatus comprising:

a processor;
a memory, connected to the processor, for storing data and computer executable instructions therein;
an input interface, connected to and responsive to the processor, for receiving market data in electronic form from a remote source;
an output interface, connected to and responsive to the processor, for connection to any one of a plurality of electronic trading systems;

wherein the processor, in response to execution of the instructions stored in the memory:

(a) optimizes each of the component portfolios residing in each of a plurality of optimization tranches, in response to current values of weights associated with said each component portfolio and prices of the securities obtained in electronic form from the remote source, to yield a corresponding plurality of optimized weights; the component portfolios being organized into a plurality of separate optimization tranches with each tranche containing at least a different one of the component portfolios, wherein a separate set of optimized weights is generated for and associated with each of the component portfolios, and each of said optimization tranches is repeatedly optimized at a first periodicity, and successive optimization tranches are optimized on a time-staggered basis spaced apart by a first interval;
(b) determines, for each of said plurality of securities and in response to each said optimization tranches being optimized, a combined optimized weight, as a function of all of the optimized weights for said each security taken across all of said component portfolios, to yield a plurality of combined optimized weights for all of the securities;
(c) sets the current weights for each of the plurality of component portfolios equal to the combined optimized weights;
(d) re-balances, at a second periodicity, an amount of holdings of each of the securities in each of the component portfolios substantially to the current weights so as to yield re-balancing trades; and
(e) issues, in response to the re-balancing trades, electronic trading instructions, via the output interface, to the electronic trading systems to effectuate said re-balancing trades for each of the component portfolios.

**10.** The apparatus recited in claim 9 wherein the processor, in response to execution of the instructions, ascertains the combined optimized weight for said each security as a weighted average of said optimized weights for said each security taken across all of said component portfolios.

11. The apparatus recited in claim 10 wherein the processor, in response to execution of the instructions, equally weights each of said optimized weights in determining the combined optimized weight.

12. The apparatus recited in claim 11 wherein the processor, in response to execution of the instructions, organizes the composite portfolio into trading tranches, wherein each one of said trading tranches comprises at least a different one of the component portfolios.

13. The apparatus recited in claim 12 wherein the processor, in response to execution of the instructions, issues trading instructions for each one of said trading tranches on a time-staggered basis spaced apart by a second interval.

14. The apparatus recited in claim 13 wherein the processor, in response to execution of the instructions, routes the trading instructions for different ones of the trading tranches to different corresponding ones of a plurality of brokers for execution.

15. The method recited in claim 14 wherein the processor, in response to execution of the instructions and, for a given one of the component portfolios, determines appropriate trades sufficient to change an actual weighting of a corresponding one of the securities in the given one component portfolio to lie within a predefined range of a corresponding one of the current weights associated with the given one component portfolio.

16. The apparatus recited in claim 15 wherein the first and second periodicities are thirteen weeks and one week, respectively; and the first and second intervals are a week and a week day, respectively.

17. A method, for use in conjunction with computer-implemented apparatus, for managing a composite investment portfolio formed of a plurality of component portfolios, wherein all of the component portfolios hold the same securities and each of the component portfolios has a numeric weight associated with each of said securities held in said each component portfolio, the apparatus comprising: a processor; a memory, connected to the processor, for storing data and computer executable instructions therein; an input interface, connected to and responsive to the processor, for receiving market data in electronic form from a remote source; an output interface, connected to and responsive to the processor, for connection to any one of a plurality of electronic trading systems; the method comprising the steps, performed by the processor in response to execution of the instructions stored in the memory, of:

(a) optimizing each of the component portfolios residing in each of a plurality of optimization tranches, in response to current values of weights associated with said each component portfolio and prices of the securities obtained in electronic form from the remote source, to yield a corresponding plurality of optimized weights; the component portfolios being organized into a plurality of separate optimization tranches with each tranche containing at least a different one of the component portfolios, wherein a separate set of optimized weights is generated for and associated with each of the component portfolios, and each of said optimization tranches is repeatedly optimized at a first periodicity, and successive optimization tranches are optimized on a time-staggered basis spaced apart by a first interval;
(b) determining, for each of said plurality of securities and in response to each said optimization tranches being optimized, a combined optimized weight, as a function of all of the optimized weights for said each security taken across all of said component portfolios, to yield a plurality of combined optimized weights for all of the securities;
(c) setting the current weights for each of the plurality of component portfolios equal to the combined optimized weights;
(d) re-balancing, at a second periodicity, an amount of holdings of each of the securities in each of the component portfolios substantially to the current weights so as to yield re-balancing trades; and
(e) issuing, in response to the re-balancing trades, electronic trading instructions, via the output interface, to the electronic trading systems to effectuate said re-balancing trades for each of the component portfolios.

18. The method recited in claim 17 wherein said determining step comprises the step of ascertaining the combined optimized weight for said each security as a weighted average of said optimized weights for said each security taken across all of said component portfolios.

**19.** The method recited in claim 18 wherein said determining step further comprises the step of equally weighting each of said optimized weights in determining the combined optimized weight.

**20.** The method recited in claim 19 further comprising the step of organizing the composite portfolio into trading tranches, wherein each one of said trading tranches comprises at least a different one of the component portfolios.

**21.** The method recited in claim 20 wherein the issuing step further comprises the step of issuing trading instructions for each one of said trading tranches on a time-staggered basis spaced apart by a second interval.

**22.** The method recited in claim 21 wherein the issuing step further comprises the step of routing the trading instructions for different ones of the trading tranches to different corresponding ones of a plurality of brokers for execution.

**23.** The method recited in claim 22 wherein the re-balancing step comprises the step, for a given one of the component portfolios, of determining appropriate trades sufficient to change an actual weighting of a corresponding one of the securities in the given one component portfolio to lie within a predefined range of a corresponding one of the current weights associated with the given one component portfolio.

**24.** The method recited in claim 23 wherein the first and second periodicities are thirteen weeks and one week, respectively; and the first and second intervals are a week and a week day, respectively.

FIG. 1
(PRIOR ART)

Composite Portfolio Rebalancing (weekly)

Composite Portfolio — Component portfolios 5 — 1

Weight Re-optimizing — Optimization tranches 10

Weights w(i,j)

Composite Portfolio — Component portfolios 5 — 15

Composite Portfolio — Portfolio Trading — 25

Component portfolios 5

$5_a$

$5_e$

$7_1$

OT 1 (week 1)

$10_1$

$5_a$

$5_e$

$5_a$

$5_e$

Composite Portfolio Rebalancing Trades 20

$20_1$

$5_a$

$5_d$

Monday trading Component Portfolios

$30_1$

$5_f$

$5_h$

$7_2$

OT 2 (week 2)

$10_2$

$5_f$

$5_h$

13

$5_f$

$5_h$

$20_2$

$5_e$

$5_g$

Tuesday trading Component Portfolios

$30_2$

$5_t$

$5_x$

$7_{13}$

OT 13 (week 13)

$10_{13}$

$5_t$

$5_x$

$5_t$

$5_x$

$20_5$

$5_u$

$5_x$

Friday trading Component Portfolios

$30_5$

30 Portfolio Trading

40

EP 1 351 179 A1

FIG. 2

FIG. 3

300

**Portfolio Management Process**

Current equity prices from exchanges
305

Current component portfolio weights and holdings (equity, cash)

Data Store
320

(staggered weekly for 13 successive OTs)

Weight Determining  310

| Portfolio Weight Optimizing Process 315 | Portfolio Weight Updating Process 500 |

$w(i,j)$

$v(j)$

(every week for all portfolios)

Portfolio Re-balancing  350

Combined Weight Generating (Averaging) Process 600

$p(j)$
355

Portfolio Re-balancing & Trading Process 700

Trades to various brokers

362
364

To/from brokers' electronic trading systems

Trade execution data

321  Updated portfolio weights    $p(j)$

363  Current portfolio weights

325  Current component portfolio holdings (equities and cash)

327  Executed trades and updated component portfolio holdings

EP 1 351 179 A1

15

FIG. 4

Network access to/from brokers' electronic trading systems (362/364)

433

PROCESSOR 420

COMM I/F 430

435

INPUT I/F 410

Dedicated input sources (e.g., real-time market price data feed 305)

403

MEMORY 440

RAM 442

DISKETTE DRIVE 444

450

O/S 455

DATA 320

APPLICATION PROGRAMS 457

Portfolio Management Process 300

OUTPUT I/F 460

DISPLAY 470

475

PRINTER 480

485

405

COMPUTER (e.g. PC)

USER COMMANDS & SELECTION

490

USER INPUT DEVICE

(e.g., KEYBOARD, MOUSE)

495

EP 1 351 179 A1

16

# FIG. 5
## Portfolio Weight
## Updating Process

500

⊗ Enter

510

Initialize:
k = specific number of component portfolio to be updated
        (for current optimization tranche)
n = number of securities (e.g., stocks) in component portfolios

Input:
a) weight matrix w(i,j) where i=1,...,m, and j = 1,...,n; and
b) optimized portfolio weights, v(j) where j = 1,...,n for current
        optimization tranche

520

Initialize j:
j = 1

530

Set:
w(k,j) ← v(j)

540

565

560

Increment j:
j ← j+1

553

Is j = n?

550

No

Yes

557

570

Output:
Updated portfolio weights w(i,j), i=1,...,m, and j=1,...,n for weight matrix
w

⊗ Exit

# FIG. 6
## Combined Weight Generating (Averaging) Process

⊗ Enter

605

600

Initialize:
m = total number of component portfolios
n = total number of securities in component portfolios

Input:
a) portfolio weight matrix w(i,j) where i=1,...,m and j = 1,...,n; and
b) weight factors q(i), where i=1,...,m

610

Initialize j: j = 1 ~615

Set output weight: ~620
p(j) = 0

653

Initialize i: i = 1 ~625

641

640

p(j) ← p(j) + q(i) * w(i,j) ~630

Increment i:
i ← i+1

637

No

635

Is i = m?

Yes ~639

650

Increment j:
j ← j+1

647

No

645

Is j = n?

Yes ~649

Output: 655
p(j) = combined (averaged) portfolio weights, where j=1,...,n, for use with all component portfolios

⊗ Exit

# FIG. 7
### Portfolio Re-balancing and Trading Process

700

⊗ Enter

710

Initialize:
n = total number of securities in component portfolios

720

Input, for all j = 1,...,n:
a) combined (averaged) optimized weights, p(j);
b) number fo shares, s(j), for each security in current component portfolio; and
c) current price, x(j), of each security in current component portfolio

Calculate total value of current component portfolio — 730

Calculate actual portfolio weights, z(j) for j = 1,...,n, for current component portfolio

790

740

Increment j:
j ← j+1

Initialize j: j = 1 — 750

760

No

Is $\left| p(j) - z(j) \right| > \delta \cdot p(j)$?

763

767 — Yes

Trade shares (buy/sell) of $j^{th}$ security in current component portfolio until actual portfolio weight of that security is within $\delta \cdot p(j)$ of p(j) — 770

783

No

780

Is j = n?

Yes — 787

⊗ Exit

**European Patent**
**Office**

**DECLARATION**

which under Rule 45 of the European Patent Convention shall be considered, for the purposes of subsequent proceedings, as the European search report

**Application Number**

EP 03 07 6014

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| MUNICH | 22 July 2003 | Laub, C |

EPO FORM 1504 (P04C37)